Europäisches Patentamt

European Patent Office

Office européen des brevets

(19)

(11) Publication number: **0 113 147**
**A1**

(12) # EUROPEAN PATENT APPLICATION

(21) Application number: **83201811.3**

(22) Date of filing: **15.12.83**

(51) Int. Cl.³: **B 60 V 3/02**

(30) Priority: **22.12.82 NL 8204954**

(43) Date of publication of application:
**11.07.84 Bulletin 84/28**

(84) Designated Contracting States:
**BE DE FR GB NL**

(71) Applicant: B.V. Handelsmaatschappij voorheen Bernard Themans
Poulinkstraat 13
NL-7600 AA Almelo(NL)

(72) Inventor: Oostenbrink, Dirk Jan Tieme
Mernaweg 33
NL-9964 AP Wehe den Hoorn(NL)

(74) Representative: Bruin, Cornelis Willem et al,
OCTROOIBUREAU ARNOLD & SIEDSMA Sweelinckplein 1
NL-2517 GK The Hague(NL)

(54) **Mobile transport means.**

(57) A transport means running on the ground by wheels, such as a motor vehicle (1) or a trailer, may be employed under any, even very extreme ground conditions on nearly any soil, in that it is provided with air pressure means for creating an air cushion between the transport means and the ground in order to reduce the forces exerted by the wheels on the ground.

FIG.1

EP 0 113 147 A1

Croydon Printing Company Ltd.

0113147

-1-

The invention relates to a transport means running on the ground by wheels, for example, a motor vehicle or a trailer.

Such a transport means is known in the form of, for example, a loadable motor vehicle or a trailer and is intended, in particular but not exclusively, for use in agriculture, horticulture, cattle raising, seismological research, for example, for mineral-exploration and agrogeological research.

Driving a loaded transport device on soft and/or marshy ground involves the problem that the transport device can travel on the ground only with great difficulty whilst damaging the ground and leaving tracks. Therefore, in practice in the case of too soft or swampy a ground the intended transport is postponed until the ground is sufficiently practicable. Even the use of very broad tyres with large contact surfaces does not provide sufficient relief in practice. This results in that the number of effectively useful days, for example, for spreading liquid manure, seeds and fertilizer and the like is very limited.

The invention has for its object to construct a transport device so that it can be employed under any, even very extreme ground conditions on substantially any soil.

For this purpose the invention provides, in general, a transport means of the kind set forth in the preamble which is provided with air pressure means for creating an air cushion between the transport means and the ground in order to reduce the forces exerted by the wheels on the ground. A bottom plate with an air supply opening communicating with a source of pressurized air may be used.

In order to enhance the effectiveness by using the largest possible, active air cushion surface it is advantageous to use a transport means having a frame arranged on one side of the transport means with a bottom plate part adjoining the bottom plate of the transport means.

The invention has furhtermore for its object to design the transport means in a manner such that it can also be used as a normal transport means on the road and, in particular, does not have too large a track gauge. For this purpose the or each frame may be tiltable. More particularly the or each frame may be constructed in the form of a pivotable lower frame part arranged on the side concerned of the transport means and extending in the operative position substantially horizontally at a predetermined height above the ground and of a supporting member supporting the lower frame part in its horizontal operative position and being arranged above the lower frame part on said side of the transport means.

In order to prevent, in the presence of an air cushion, the or each frame from moving upwards so that the construction would exhibit unstability or even become less satisfactorily operative, it is advantageous to design the supporting member in the form of a rigid upper frame part pivotally arranged on the transport means, whilst the lower and the upper frame parts may have co-operating guard means for blocking the upward displacement of the frame parts during the operation of the air pressure means.

Practically very useful is the further development of the invention in which the lower frame part is provided with a stop against which the free end of the upper frame part takes a firm stand at an upward displacement of the lower frame part, whilst the upper frame part is connected with a lifting member and coupling means are provided for displacing the lower frame part upwards at an upward displacement of the upper frame part, the end of the upper frame part being displaced over and across the stop.

In general it should be noted that the air pressure means are preferably energized in a manner such that the transport means is not lifted from the ground and remains normally steerable when driving on the ground, be it with a reduction of the forces exerted by the wheels on the ground. By way of orientation it is noted that a loaded dispenser waggon has an overall weight of the order of magnitude of, for example, 10,000 kgs. With an equal distribution among four wheels this comes down to a force of 2500 kgs exerted by each wheel on the ground. When using the air cushion as proposed by the invention the overall operative weight may be of the order of magnitude of, for example, 3000 kgs, which means a force per wheel of about 750 kgs.

In order to limit, on the one hand, the forces exerted by the wheels on the ground under any condition, for example, with a varying load and to ensure on the other hand a satisfactory steerability and the braking power of the transport means by reducing said forces not too much, the transport means may be provided with control-means for maintaining at least substantially constant the forces exerted by the wheels on the ground, said control-means controlling the pressure provided by the air pressure means in dependence on the weight of the transport means. For example, the control-means may comprise a sensor measuring the distance between the ground and a reference point of the transport means, said sensor applying a representative output signal to the air pressure means.

The sensor may be designed to assess the extent of depression of at least one spring arranged between the axle of a wheel and the transport means.

The invention will now be described with reference to the drawing of an arbitrary embodiment. The drawing shows in

Fig.1 a perspective view of a van embodying the invention,

Fig.2 an elevational view corresponding to Fig.1, some parts being omitted for the sake of clarity,

Fig.3 a van as shown in Figs. 1 and 2, the frames being tilted up,

Fig.4 a detail IV of Fig.2,

Fig.5 the frame parts of Fig.4 in the tilted-up position,

Fig.6 a fragmentary detail VI of Fig.1,

Fig.7 a fragmentary, perspective view of a ventilator for producing the air cushion, and

Figs. 8,9 and 10 diagrams of means for maintaining constant the forces exerted by the wheels on the ground.

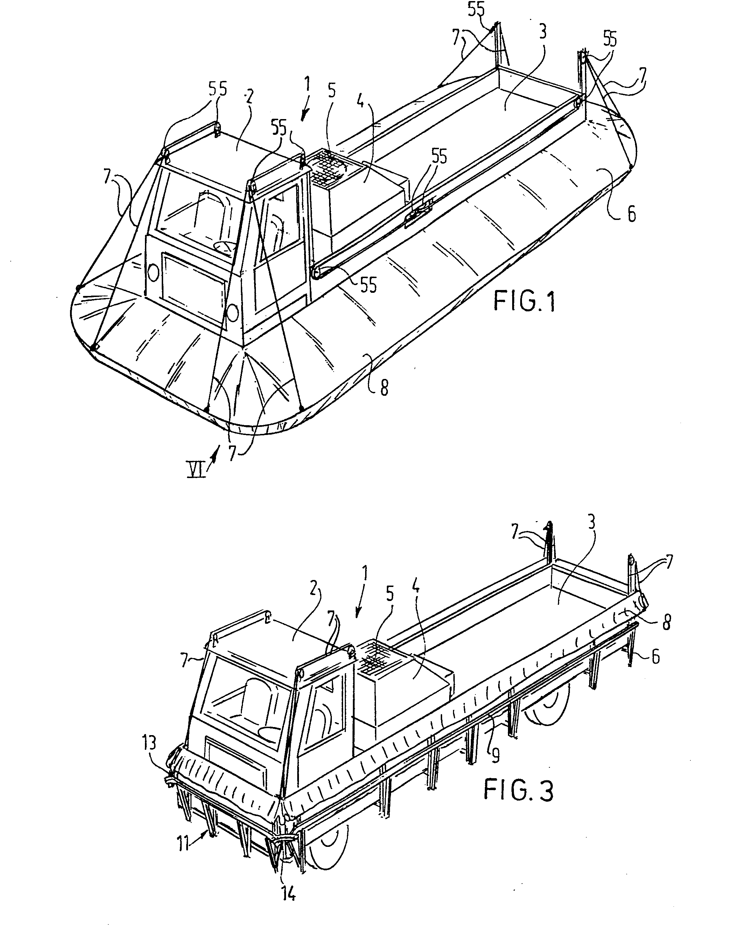

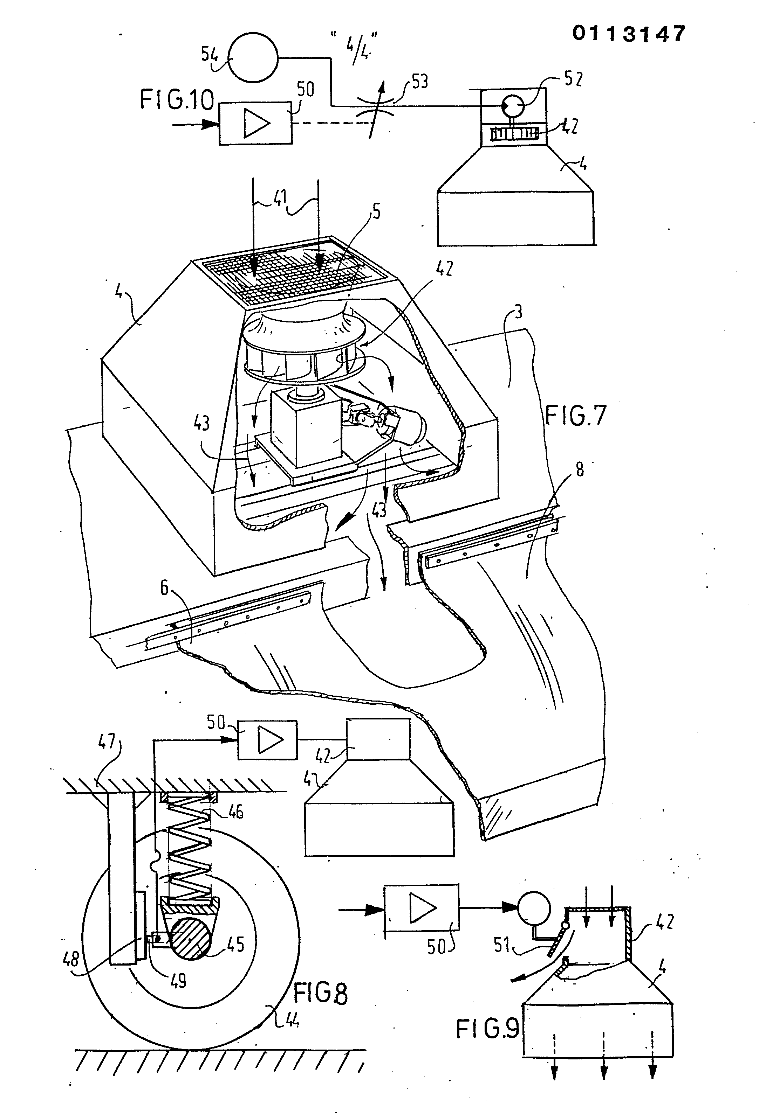

Fig.1 shows a van 1 having a cabin 2 and a loading trough 3. In the loading trough is arranged a ventilator unit 4, which sucks in air from above in the manner to be described in detail with reference to Fig.7 through an opening covered by a grating 5 and blows it downwards to create an air cushion, for which purpose the bottom surface of the van 1 is widened by a tiltable structure 6 arranged around the van 1.

The structure 6 can be tiled up by exerting tractive forces on cables 7 passing along pulleys 55 to a winch (not shown).

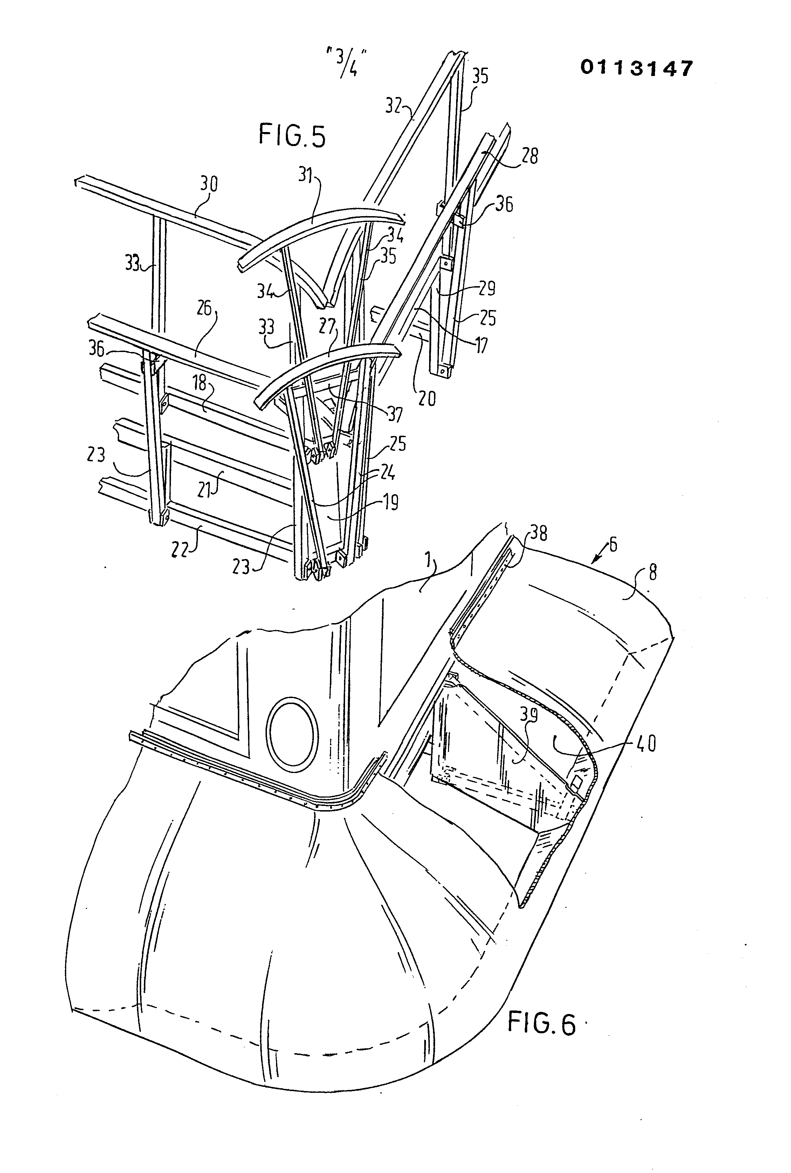

The tiltable structure 6 is connected on the top side in sealing relationship with the van 1 and closed by an airtight cloth 8. This is shown in further detail in Fig.6.

By actuating the ventilator unit 4 an air cushion is created below the van 1 and the structure 6 so that the forces exerted by the wheels of the van on the ground can be appreciably reduced.

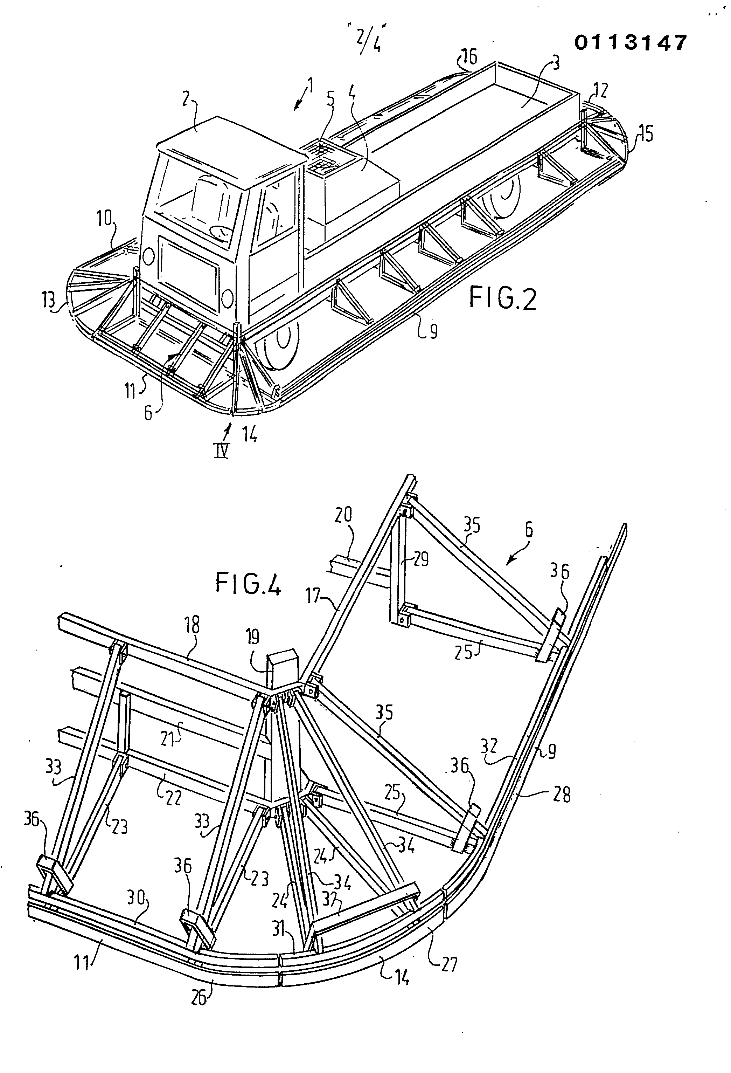

Fig.2 shows the construction of the tiltable structure 6. It comprises two side parts 9,10, a front part 11, a rear part 12 and four corner parts 13,14,15,16, all of which are individually tiltable as will be described in detail, in particular, with reference to Fig.4.

Fig.3 shows the van 1 in the position in which the structure 6 is in the tilted-up position.

Fig.4 shows the detail IV of Fig.2. The side part 9 is coupled by a beam 17 with the chassis of the van 1. The front part 11 is coupled through a beam 18 with the chassis of the van 1. At the corner the beams 17 and 18 join at a vertical beam 19, which carries the corner part 14. The part 9,10 are coupled through stiffening beams 20. The corner beams 19 are cpouled with one another by beams 21,22. The parts 11,14,9 have rims 26,27,28 carried by beams 23,24 and 25 respectively, said beams 23,24,25 being pivotally connected with the beams 22 and 19 respectively and with vertical supporting beams 29 coupled with the beam 17.

With the rims 26,27,28 are co-operating rims 30,31, 32, which are carried by beams 33,34 and 25 respectively. These beams 33,34,35 are pivotally connected with the horizontal beam 18, the vertical beam 19 and the horizontal beam 17 respectively. The beams 23 and 25 are provided with brackets 36 gripping around the beams 33 and 35 respectively. The beams 24 carry in common a broad bracket 37, which extends across the beams 34. By exerting an upwardly directed lifting force on the beams 33,34,25 by means of the cable 7 described with reference to Fig.1 these beams 33,34,35 carry upwards by means of the brackets 36,37 the rims 26,27,28 with their accessories in a manner such that the entire structure 6 can be tilted up.

In order to ensure that in the presence of an air cushion the structure does not spontaneously tilt up, the rims 26,30,27,31,28,32 co-operate in a manner such that, when an upwardly directed force is exerted on the rims 26,27,28 the rims 30,31,32 resist an upward displacement by means of the beams 33,34,35. It is noted here that the air cushion produces an upwardly directed force owing to the presence of plate parts (not shown) on the undersides of the beams 23,24,25.

Fig.5 shows the same detail as Fig.4, but in the tilted-up position of the structure 6.

Fig.6 shows the detail VI of Fig.1. From this figure it is apparent that the airtight cloth 8 extends on the top side of the structure 6, said cloth being sealingly connected by a rim 38 with the van 1. In order to ensure a stable air cushion laps 39 are fastened to the inner side of the cloth 8 leaving free passages 40.

Fig.7 finally shows the ventilator unit 4 which is designed to suck in air in the direction of the arrows 41 through the grating 5 by means of a ventilator 42, which blows pressurized air in the manner indicated by arrows 43 below the van 1 and the structure 6 to create the air cushion.

Figs. 8,9 and 10 schematically show control-means for maintaining substantially constant the forces exerted by the wheels on the ground. These control-means control the pressure produced by the air pressure means in dependence on the weight of the transport means.

Fig.8 shows a wheel 44 carried by an axle 45. This axle is coupled through a spring 46 with the chassis 47 of the van 1. A linear potentiometer 48 has coupled its resistance path with the chassis 47, whereas the cursor 49 is coupled with the axle 45 so that a depression of the spring produces a variation of the position of the cursor 49 of the potentiometer 48. In this way a signal can be obtained which is representative of the extent of depression of the spring 46 and hence of the distance between the bottom and the chassis 47 or at least a reference point of the van 1 and hence of the extent of loading of the van 1. The output signal of the potentiometer is applied to an amplifier 50, which applies a control- signal to the ventilator 42. It will be obvious that in this way a feedback system is obtained by which the force exerted by the wheels on the ground can be maintained constant within given limits. Without further explanation it will be obvious that said control is only operative when at a larger depression the degree of energization of the ventilator 42 becomes higher.

Fig.9 shows an embodiment in which the ventilator is provided with an electrically controllable valve 51, which is opened to a greater or lesser extent under the influence of the output signal of the amplifier 50 so that the effective pressure of the air cushion can be adjusted.

Fig.10 shows a preferred embodiment in which the ventilator is driven by a hydromotor 52, which is connected through an electrically controllable choke 53 with a source 54 of pressurized medium. The choke 53 is controlled by the output signal of the amplifier 50. In most professional transport means a pressurized medium source is already available so that by a relatively simple variation at low cost the air cushion can be obtained by using a hydromotor.

It should be noted that the invention is not limited to the embodiments described and illustrated. The invention may as well be carried out on a trailer and, moreover, the presence of the effective, surface-enlarging structure is not always required. Furthermore, the construction may be designed so that, for example, mainly the rear wheels are releived. In this case the air cushion may be locally limited and the widening structure may be arranged, for example, only on the rear side of the transport means.

-1-

CLAIMS

1. A transport means running on wheels on the ground, for example, a motor vehicle or a trailer, <u>characterized by</u> air pressure means for creating an air cushion between the transport means and the ground in order to reduce the forces exerted by the wheels on the ground.

2. The transport means as claimed in claim 1, <u>characterized by</u> a bottom plate having an air supply opening communicating with a source of pressurized air.

3. The transport means as claimed in claim 2, <u>characterized by</u> at least one frame arranged on one side of the transport means with a bottom plate part adjoining the bottom plate of the transport means.

4. The transport means as claimed in claim 3, <u>characterized in</u> that the or each frame can be tilted up.

5. The transport means as claimed in claim 4, <u>characterized in</u> that the or each frame is constructed in the form of a lower frame part pivotally on the side concerned of the transport means and extending in its operative position mainly horizontally at a predetermined height above the ground and of a supporting member supporting the lower frame part in its horizontal operative position and arranged above the lower frame part on said side of the transport means.

6. The transport means as claimed in claim 5, <u>characterized in</u> that the supporting member is constructed in the form of a rigid, upper frame part pivotally arranged on the transport means and in that the lower and upper frame parts comprise co-operating guard means for blocking the upward displacement of the frame parts during the operation of the air pressure means.

7. The transport means as claimed in claim 6, <u>characterized in</u> that the lower frame part is provided with a stop against which the free end of the upper frame part stands firm at the upward displacement of the lower frame part, in that the upper frame part is connected with a lifting member and in that coupling means are provided for upwardly displacing the lower frame part simultaneously with the upward displacement of the upper frame part, whilst the end of the upper frame part is displaced over and across the stop.

8. The transport means as claimed in anyone of the preceding claims, <u>characterized by</u> control-means for maintaining at least substantially constant the forces exerted by the wheels on the ground, said control-means controlling the pressure produced by the air pressure means in dependence on the weight of the transport means.

9. The transport means as claimed in claim 8, <u>characterized in</u> that the control-means comprise a sensor measuring the distance between the ground and a reference point of the transport means, said sensor applying a representative output signal to the air pressure means.

10. The transport means as claimed in claim 9, <u>characterized in</u> that the sensor is designed for assessing the extent of depression of at least one spring arranged between the axle of a wheel and the transport means.

"1/4"

FIG.1

FIG.3

12 /45_3

FIG.2

FIG.4

0113147

FIG.5

30
31
32
35
28
36
33
34
34
35
36
35
26
29
25
17
33
27
37
20
18
25
23
24
21
19
22
23
23

38
1
6
8
39
40

FIG.6

0113147

FIG.10

FIG.7

FIG8

FIG.9

## DOCUMENTS CONSIDERED TO BE RELEVANT

| Category | Citation of document with indication. where appropriate, of relevant passages | Relevant to claim | CLASSIFICATION OF THE APPLICATION (Int. Cl. 3) |
|---|---|---|---|
| X | US-A-3 586 118 (BERTIN) <br> * Abstract; column 2, lines 18-30 * | 1,8 | B 60 V 3/02 |
| | --- | | |
| X | US-A-4 063 611 (ANDERSON) <br> * Column 2, lines 11-46 * | 1,2 | |
| | --- | | |
| A | GB-A-1 494 733 (HOVERCRAFT) <br> * Page 2, lines 83-97 * | 1,3,4 | |
| | --- | | |
| X | FR-A-1 390 430 (BERTIN) <br> * Page 1, left-hand column, lines 6-26 * | 1 | |
| | --- | | |
| X | GB-A-1 314 221 (BERTIN) <br> * Figure 14 * | 1 | TECHNICAL FIELDS SEARCHED (Int. Cl. 3) |
| | --- | | |
| X | US-A-3 387 685 (FRESH) <br> * Figure 5 * | 4,5,6 | B 60 V |
| | ----- | | |

The present search report has been drawn up for all claims

| Place of search | Date of completion of the search | Examiner |
|---|---|---|
| THE HAGUE | 06-03-1984 | HAUGLUSTAINE H.P.M. |